# EUROPÄISCHE PATENTSCHRIFT

(11) **EP 1 047 721 B1**
(45) Veröffentlichungstag und Bekanntmachung des Hinweises auf die Patenterteilung: **21.05.2003**
(21) Anmeldenummer: 99906134.4
(22) Anmeldetag: 15.01.1999
(51) Int. Cl.: C08G 65/20, C08G 65/10, B01J 21/16

(54) **KATALYSATOR UND VERFAHREN ZUR HERSTELLUNG VON POLYTETRAHYDROFURAN**
CATALYST AND METHOD FOR THE PRODUCTION OF POLYTETRAHYDROFURAN
CATALYSEUR ET PROCEDE DE PRODUCTION DE POLYTETRAHYDROFURANE

(30) Priorität: 16.01.1998 DE 19801462
(43) Veröffentlichungstag der Anmeldung: 02.11.2000
(73) Patentinhaber: BASF AKTIENGESELLSCHAFT, 67056 Ludwigshafen (DE)
(72) Erfinder: ELLER, Karsten, D-67061 Ludwigshafen (DE); RÜTTER, Heinz, D-67126 Hochdorf-Assenheim (DE); HESSE, Michael, D-67549 Worms (DE); BECKER, Rainer, D-67098 Bad Dürkheim (DE)
(74) Vertreter: Isenbruck, Günter, Dr.
(86) Internationale Anmeldenummer: EP9900220
(87) Internationale Veröffentlichungsnummer: WO99036459

(56) Entgegenhaltungen:
- DE-A- 2 801 792
- US-A- 4 127 513
- US-A- 4 192 943
- US-A- 4 228 272
- US-A- 4 329 445
- US-A- 5 614 572

## Beschreibung

Die vorliegende Erfindung betrifft ein verbessertes Verfahren zur Herstellung von Polytetrahydrofuran, Polytetrahydrofuran-Copolymeren, Diestem oder Monoestern dieser Polymere durch die Polymerisation von Tetrahydrofuran in Gegenwart mindestens eines Telogens und/oder Comonomers an säureaktivierten Calcium-Montmorilloniten.

Polytetrahydrofuran ("PTHF"), auch Polyoxybutylenglykol genannt, ist in der Kunststoff- und Kunstfaserindustrie ein vielseitiges Zwischenprodukt und dient unter anderem zur Herstellung von Polyurethan-, Polyester- und Polyamid-Elastomeren, zu deren Herstellung es als Diolkomponente eingesetzt wird. Daneben ist es - wie auch manche seiner Derivate - in vielen Anwendungsfällen ein wertvoller Hilfsstoff, zum Beispiel als Dispergiermittel oder beim Entfärben ("Deinken") von Altpapier.

PTHF wird technisch vorteilhafterweise durch Polymerisation von Tetrahydrofuran an geeigneten Katalysatoren in Gegenwart von Reagenzien hergestellt, deren Zugabe die Steuerung der Kettenlänge der Polymerketten und so die Einstellung des mittleren Molekulargewichts auf den gewünschten Wert ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden. So können zum Beispiel durch Verwendung von Carbonsäuren oder Carbonsäureanhydriden als Telogene die Mono- oder Diester des PTHF hergestellt werden.

Andere Telogene wirken nicht nur als Kettenabbruchreagenzien, sondern werden auch in die wachsende Polymerisatkette des PTHF eingebaut, haben also nicht nur die Funktion eines Telogens, sondern auch die eines Comonomers und können daher mit gleicher Berechtigung als Telogen oder als Comonomer bezeichnet werden. Beispiele für solche Comonomere sind Wasser oder Telogene mit zwei Hydroxylgruppen wie Dialkohole. Beispiele für solche Dialkohole sind Ethylenglykol, Butylenglykol, 1,4-Butandiol, 1,6-Hexandiol oder niedermolekulares PTHF. Weiterhin sind als Comonomere 1,2-Alkylenoxide, wie Ethylenoxid oder Propylenoxid, 2-Methyltetrahydrofuran oder 3-Methyltetrahydrofuran geeignet. Die Verwendung solcher Comonomere führt mit Ausnahme von Wasser, 1,4-Butandiol und niedermolekularem PTHF zur Herstellung von Tetrahydrofuran-Copolymeren. Auf diese Weise kann das PTHF chemisch modifiziert werden. Ein Beispiel dafür ist die Verwendung des Telogens 2-Butin-1,4-diol, dessen Zugabe zum Vorhandensein eines Anteils an C≡C-Dreifachbindungen in den Polymerketten des PTHF führt. Derartig modifiziertes PTHF kann durch die Reaktivität dieser Dreifachbindungen an diesen Stellen chemisch weiter veredelt werden, zum Beispiel durch Hydrierung der Dreifach- zu Doppelbindungen, durch anschließende Anpolymerisation anderer Monomere ("Pfropfen") zur Einstellung der Eigenschaften des Polymers, Vernetzung zur Bildung von Polymeren mit vergleichsweise starrer Struktur, oder andere gängige Maßnahmen der Polymerchemie. Die komplette Hydrierung der vorhandenen Dreifachbindungen ist ebenfalls möglich und führt im allgemeinen zu PTHF mit einer besonders niedrigen Farbzahl.

In der DE-B-1 226 560 ist ein Verfahren zur Herstellung von Polytetrahydrofurandiacetaten beschrieben. Diese werden durch Polymerisation von Tetrahydrofuran (THF) in Gegenwart von Bleicherden als Katalysator erhalten. Insbesondere werden Aluminiumhydrosilikate oder Aluminium-Magnesiumsilikate vom Typus des Montmorilloniten, die durch Säure aktiviert sein können, eingesetzt. Beispielsweise werden eine saure Montmorillonit-Erde mit der Handelsbezeichnung "Tonsil®" und als Telogen Essigsäureanhydrid eingesetzt.

Bei Verwendung der Montmorillonite gemäß DE-B-1 226 560 werden PTHF-Diacetate erhalten, die eine relativ hohe Farbzahl nach APHA aufweisen. Wird ein Produkt mit einer niedrigen Farbzahl gewünscht, so muß das nach DE-A-1 226 560 erhaltene Gemisch zusätzlichen Reinigungsschritten unterworfen werden.

WO 94/05719 betrifft ein Verfahren zur Herstellung von Polytetramethylenetherglykoldiestern unter Verwendung eines Katalysators des Aluminiumsilikat-Typs. Anstelle bekannter natürlicher Montmorillonite werden neben amorphen Aluminiumsilikaten oder Zeolithen säureaktivierte und kalzinierte Kaoline eingesetzt.

Gemäß DE-C-195 13 493 werden zur Herstellung von Polytetramethylenetherglykoldiester säureaktivierte Magnesium-Aluminium-Hydrosilikate vom Attapulgit-Typ als Katalysator eingesetzt. Die Verwendung dieser Katalysatoren anstelle der bekannten Montmorillonit-, Zeolith- oder Kaolinkatalysatoren soll zu höheren Polymerisationsgeschwindigkeiten und gleichmäßigeren Eigenschaften und enger Molekulargewichtsverteilung der erhaltenen Polymerisate führen.

US 5,210,283 beschreibt ein Verfahren zur Herstellung von pTHF in Gegenwart von Säureanhydriden an säureaktivierten Bleicherden, die vor ihrer Verwendung bei Temperaturen oberhalb von 600°C kalziniert wurden. Als Vorteil der Methode wird eine enge Molekulargewichtsverteilung des resultierenden Produkts hervorgehoben, die Farbzahl wird jedoch dadurch nicht vermindert.

US 4,127,513 beschreibt ein Verfahren zur Minimierung cyclischer Oligomeren in THF/Alkylenoxid-Copolymerisaten an säureaktivierten Montmorilloniten mit einer Acidität von 0.1 bis 0.9 mEq. H⁺ pro g; auch hier wird keine Farbzahlverbesserung erwähnt.

US 4,228,272 beschreibt eine Verbesserung gegenüber US 4,127,513, indem ein säureaktivierter Montmorillonit mit einem Porenvolumen von 0.4 - 0.8 cm³/g, einer Oberfläche von 220 - 260 m²/g und einem durchschnittlichen Porenvolumen von 0.1 - 0.3 µm verwendet wird. Der eingesetzte Katalysator KO® von Südchemie bewirkt jedoch nur eine Farbzahlverbesserung im Anfangsstadium der Polymerisation.

Die bekannten Katalysatorsysteme besitzen jedoch noch keine ausreichende Aktivität für eine technische Durchführung des Verfahrens, insbesondere unter Einsatz von technischem THF.

Da die Wirtschaftlichkeit eines heterogen-katalysierten PTHF-Verfahrens entscheidend von der Produktivität des Katalysators und von der Reinheit der erhaltenen Produkte abhängt, lag der vorliegenden Erfindung die Aufgabe zugrunde, einen Katalysator für ein PTHF-Verfahren zur Verfügung zu stellen, mit dem höhere Polymer-Ausbeuten bei niedrigerer Farbzahl des erhaltenen PTHF erreichbar sind.

Die Aufgabe wird erfindungsgemäß gelöst durch Bereitstellung eines Verfahrens zur Herstellung von Polytetrahydrofuran, Polytetrahydrofuran-Copolymeren oder Diestern oder Monoestem davon durch Polymerisation von Tetrahydrofuran in Gegenwart mindestens eines Telogens und/oder Comonomers an säureaktivierten Calcium-Montmorilloniten als Katalysator, bei dem der Calcium-Montmorillonit eine BET-Oberfläche von mindestens 300 m²/g, eine Acidität von mindestens 0.02 mmol/g bei pKₛ < -3 und ein Porenvolumen von mindestens 0.40 cm³/g für Porengrößen im Bereich von 30 bis 200 Å besitzt.

Die erfindungsgemäß eingesetzten Montmorillonite gehören zu den Tonen, spezifischer zu der Klasse der Smectite. Für das erfindungsgemäße Verfahren können die Montmorillonite entweder natürlichen Ursprungs oder synthetischen Ursprungs sein. Bevorzugt werden natürliche Calcium-Montmorillonite eingesetzt.

Vor dem Einsatz im erfindungsgemäßen Verfahren werden die Montmorillonit-Katalysatoren vorzugsweise in Säure aktiviert. Die Aktivierung kann nach Verfahren erfolgen, wie sie beispielsweise in DE-B-10 69 583 oder EP-A-0 398 636 beschrieben sind. Die Säureaktivierung kann mit verschiedenen Säuren erfolgen, bevorzugt sind die üblichen Mineralsäuren oder organische Carbonsäuren. Bevorzugt sind die Säuren ausgewählt aus der Gruppe Salzsäure, Schwefelsäure, Salpetersäure, Phophorsäure, Ameisensäure, Essigsäure oder Citronensäure. Besonders bevorzugt sind Schwefelsäure und/oder Salzsäure.

Für die Säureaktivierung wird der Montmorillonit in Pulverform in der Säure suspendiert, wobei der Feststoffgehalt der Suspension vorzugsweise 1 bis 70 Gew.-%, besonders bevorzugt 20 bis 60 Gew.-%, bezogen auf das Gesamtgewicht der Suspension, beträgt. Die Säurekonzentration richtet sich nach der verwendeten Säure und der Art des eingesetzten Tones. Sie kann stark variieren und liegt vorzugsweise im Bereich von 2 bis 100%. Im Falle von Schwefelsäure und Salzsäure wird vorzugsweise eine Konzentration von 20 bis 50 % verwendet. Unter Rühren wird die Suspension bei einer Temperatur von vorzugsweise 30 bis 120°C, besonders bevorzugt 50 bis 110°C, für vorzugsweise 0,5 bis 24 Stunden, besonders bevorzugt 1 bis 15 Stunden, umgesetzt. Sodann wird der säureaktivierte Montmorillonit beispielsweise durch Filtration abgetrennt. Um anhaftende Säurespuren zu entfernen, wird anschließend mit destilliertem oder deionisiertem Wasser gewaschen und dann getrocknet oder kalziniert. Die Trocknung der Montmorillonit-Katalysatoren erfolgt zweckmäßigerweise bei normalem Druck und Temperaturen von 80 bis 200°C, bevorzugt 100 bis 150°C, für 1 bis 20 Stunden. Es kann auch bei vermindertem Druck und niedrigeren Temperaturen getrocknet werden. Die Kalzinierung der getrockneten Katalysatoren erfolgt vorzugsweise bei einer Temperatur von 150 bis 600°C, besonders bevorzugt 200 bis 500°C, insbesondere 300 bis 500°C, für einen Zeitraum von 0,5 bis 12 Stunden, vorzugsweise 1 bis 5 Stunden. Die Säureaktivierung kann aber auch auf eine andere, an sich bekannte Weise erfolgen. Beispielsweise kann die Säure durch Versprühen oder Verkneten unter gleichzeitiger Verformung mit dem Montmorilloniten in Kontakt gebracht werden.

Durch die Säurebehandlung wird der Katalysator vorzugsweise von Alkalimetallionen freigewaschen. Der fertige Katalysator enthält vorzugsweise weniger als 3 Gew.-%, bevorzugt weniger als 2 Gew.-%, bezogen auf das Gesamtgewicht des Katalysators, an Alkalimetallionen (bestimmt nach Glühen bei 900°C), um eine hohe Aktivität sicherzustellen.

Da Wasser als Telogen mit THF polymerisieren kann, ist bei Verwendung anderer Telogene/Comonomere als Wasser eine Trocknung und/oder Kalzinierung der Montmorillonit-Katalysatoren unter den vorstehenden Bedingungen vor ihrer Verwendung ratsam.

Die erfindungsgemäß anwendbaren Katalysatoren können für die Polymerisation von THF in Form von Pulvern, beispielsweise bei der Durchführung des Verfahrens in Suspensionsfahrweise, oder zweckmäßigerweise als Formkörper, z.B. in Form von Zylindern, Kugeln, Ringen oder Splitt, insbesondere bei einer Festbettanordnung des Katalysators, welche bei Verwendung z.B. von Schlaufenreaktoren oder beim kontinuierlichen Betrieb des Verfahrens bevorzugt ist, im erfindungsgemäßen Verfahren eingesetzt werden.

Als Telogen, d.h. als Substanz, die den Kettenabbruch der Polymerisationsreaktion bewirkt, eignen sich bei der Herstellung von PTHF-Diestern Carbonsäureanhydride, die von C₂- bis C₂₀-Monocarbonsäuren abgeleitet sind, beispielsweise Essigsäureanhydrid, Propionsäureanhydrid und Buttersäureanhydrid. Die bei Verwendung dieser Telogene entstehenden PTHF-Diester lassen sich mit verschiedenen Verfahren in PTHF überführen (z.B. nach US 4,460,796).

Als Telogen zur Herstellung der PTHF-Monoester von Monocarbonsäuren dienen im allgemeinen C₁- bis C₂₀-Monocarbonsäuren, besonders bevorzugt Ameisensäure, Essigsäure, Propionsäure, 2-Ethylhexansäure, Acrylsäure und Methacrylsäure.

Als Telogen zur Herstellung von Copolymeren des THF eignet sich beispielsweise 2-Butin-1,4-diol. Das resultierende Copolymer läßt sich anschließend durch Hydrierung der Dreifachbindungen in PTHF umwandeln, zeigt aber auch als solches interessante Eigenschaften.

Andere Copolymere von THF lassen sich durch die Verwendung von 1,2-Alkylenoxiden, bevorzugt Ethylenoxid oder Propylenoxid, 2-Methyltetrahydrofuran, 3-Methyltetrahydrofuran oder Diolen wie Ethylenglykol oder 1,6-Hexandiol erhalten.

Bei Verwendung der Telogene Wasser und/oder 1,4-Butandiol erhält man nach dem erfindungsgemäßen Verfahren PTHF in einem Schritt. Gewünschtenfalls kann auch niedermolekulares, offenkettiges PTHF eines Molekulargewichts von 200 bis 700 Dalton als Telogen in die Polymerisationsreaktion zurückgeführt werden, wo es in höhermolekulares PTHF umgewandelt wird. Da 1,4-Butandiol und niedermolekulares PTHF zwei Hydroxylgruppen haben, werden sie nicht nur als Telogen an den Kettenenden der PTHF-Kette, sondern auch in die PTHF-Kette als Monomer eingebaut.

Das Telogen wird zweckmäßigerweise gelöst im THF der Polymerisation zugeführt. Da das Telogen den Abbruch der Polymerisation bewirkt, läßt sich über die eingesetzte Telogenmenge das mittlere Molekulargewicht des PTHF oder PTHF-Diesters steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF bzw. die betreffenden PTHF-Derivate mit mittleren Molekulargewichten von 250 bis 10000 Dalton gezielt hergestellt werden. Vorzugsweise werden mit dem erfindungsgemäßen Verfahren PTHF bzw. die betreffenden PTHF-Derivate mit mittleren Molekulargewichten von 500 bis 10000 Dalton, besonders bevorzugt von 650 bis 5000 Dalton hergestellt.

Die Polymerisation wird im allgemeinen bei Temperaturen von 0 bis 80°C, vorzugsweise von 25°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden.

Üblicherweise beträgt der Druck 0,1 bis 20 bar, bevorzugt 0,5 bis 2 bar.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Besonders vorteilhaft ist die Ausführung der Polymerisation unter einer Wasserstoffatmosphäre. Diese Ausführungsform bewirkt eine besonders niedrige Farbzahl der entstehenden Polymerisate. Der Wasserstoffpartialdruck kann dabei zwischen 0,1 und 50 bar gewählt werden. Durch Dotierung des Calcium-Montmorilloniten mit Übergangsmetallen der Gruppen 7 bis 10 des Periodensystems, beispielsweise mit Ruthenium, Rhenium, Nickel, Eisen, Kobalt, Palladium und/oder Platin, kann bei einer Durchführung der Polymerisation in Gegenwart von Wasserstoff die Farbzahl noch weiter verbessert werden.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanden THF, das betreffende Telogen und der Katalysator im allgemeinen in einem Rührkessel oder Schlaufenreaktor bei den angegebenen Temperaturen solange umgesetzt, bis der gewünschte Umsatz des THF erreicht ist. Die Reaktionsszeit kann in Abhängigkeit von der zugesetzten Katalysatormenge 0,5 bis 40, vorzugsweise 1 bis 30, Stunden betragen. Die Katalysatoren werden zur Polymerisation im allgemeinen in einer Menge von 1 bis 90 Gew.-%, vorzugsweise von 4 bis 70 Gew.-%, und besonders bevorzugt von 8 bis 60 Gew.-%, bezogen auf das Gewicht des eingesetzten THFs, zugesetzt.

Zur Aufarbeitung wird der Reaktionsaustrag im Falle der diskontinuierlichen Betriebsweise vom darin befindlichen Katalysator zweckmäßigerweise durch Filtration, Dekantieren oder Zentrifugieren abgetrennt. Der vom Katalysator befreite Polymerisationsaustrag wird im allgemeinen destillativ aufgearbeitet, wobei zweckmäßigerweise nicht umgesetztes THF abdestilliert wird, und dann gewünschtenfalls niedermolekulare PTHF-Oligomere vom Polymerisat durch Destillation bei vermindertem Druck abgetrennt werden.

Die nach dem erfindungsgemäßen Verfahren besonders aktiven Katalysatoren zeichnen sich dadurch aus, daß sie durch Säureaktivierung von Calcium-Montmorilloniten hergestellt wurden, in der Art, daß sie dadurch eine BET-Oberfläche von mindestens 300 m²/g, eine Acidität von mindestens 0.02 mmol/g bei pKₛ < -3 und ein Porenvolumen von mindestens 0.40 cm³/g für Porengrößen im Bereich von 30 bis 200 Å besitzen.

Die BET-Oberfläche (5-Punkt-Methode) und das Porenvolumen werden dabei aus den Stickstoff-Adsorptions/Desorptionsisothermen erhalten. Zur Bestimmung des Porenvolumens zwischen 30 und 200 Å wird die BJH-Desorptionsverteilung ausgewertet. Das kumulative Porenvolumen beim mittleren Porendurchmesser 200 Å wird hierzu von dem entsprechenden Wert bei 30 Å subtrahiert. Die Acidität wird durch Titration gegen den Hammett-Indikator Dicinnamylidenaceton (pKₛ = - 3.0) bestimmt, wie in Tanabe et al., New Solid Acids and Bases, Stud. Surf. Sci. Catal. **51**, 1989, Chapter 2, sowie Benesi, J. Phys. Chem. **61**, 1957, S. 970 - 973, näher beschrieben. Zur Bestimmung der Acidität wird der getrocknete Katalysator in einem inerten aprotischen Lösungsmittel wie Toluol suspendiert und der Indikator mit dem definierten pKₛ-Wert von -3 sowie *n*-Butylamin oder eine ähnliche Base werden zugesetzt. Da die Reaktion der Feststoffsäure mit der Base langsam erfolgt, kann nicht in der üblichen Weise mittels einer Bürette titriert werden, sondern es werden in mehreren Ansätzen steigende Mengen an Base zugesetzt, über Nacht geschüttelt und am nächsten Morgen nach Einstellung des Gleichgewichtes bestimmt, bei welcher Basenmenge der Umschlag erfolgt ist. Es ergibt sich so eine quantitative Aussage über die Menge an Aciditätszentren in mmol Base pro Gramm Feststoffsäure unterhalb des pKₛ-Wertes des Indikators, d. h. -3.

Vorzugsweise beträgt die BET-Oberfläche des Calcium-Montmorilloniten zwischen 300 und 400 m²/g. Vorzugsweise beträgt die Acidität zwischen 0,02 und 0,1 mmol/g bei pKₛ < -3. Das Porenvolumen für Porengrößen im Bereich von 30 - 200 Å beträgt vorzugsweise zwischen 0,40 und 1,0 cm³/g.

Die bisher für die THF-Polymerisation bekannten Katalysatoren Tonsil®, K 10®, KO®, KSF®, KP 10®, etc. (vergleiche DE-B-1 226 560, DE-A-28 01 792, US 4,228,272) werden aus Natrium-Montmorilloniten durch Säureaktivierung hergestellt und erfüllen nicht die erfindungsgemäßen Bedingungen bezüglich der BET-Oberfläche, des Porenvolumens und der Acidität.

Die Erfindung wird nachstehend anhand von Beispielen näher erläutert.

### BEISPIELE

### Katalysatorherstellung

### Katalysator V1 (Vergleichsbeispiel)

Katalysator V1 war ein säureaktivierter Natrium-Montmorillonit (Tonsil Optimum 210 FF® von Südchemie) mit einer BET-Oberfläche von 239 m²g⁻¹, einem Porenvolumen von 0.31 cm³g⁻¹ im Bereich von 30 bis 200 Å und ohne Acidität < pKₛ -3.

### Katalysator V2 (Vergleichsbeispiel)

Katalysator V2 war ein säureaktivierter Natrium-Montmorillonit (K 10® von Südchemie) mit einer BET-Oberfläche von 270 m²g⁻¹, einem Porenvolumen von 0.35 cm³g⁻¹ im Bereich von 30 bis 200 Å und einer Acidität von 0.037 mmol g⁻¹ < pKₛ-3.

### Katalysator A

Katalysator A war ein säureaktivierter Calcium-Montmorillonit (XMP-4® von Laporte) mit einer BET-Oberfläche von 327 m²g⁻¹, einem Porenvolumen von 0.56 cm³g⁻¹ im Bereich von 30 bis 200 Å und einer Acidität von 0.042 mmol g⁻¹ < pKₛ -3.

### Katalysator V3 (Vergleichsbeispiel)

Der Katalysator V3 bestand aus Strängen des Katalysators V2. Hierzu wurde das K 10 Pulver mit Wasser in einem Kneter vermengt und in einer Strangpresse zu Strängen verformt. Diese wurden anschließend bei 350°C kalziniert.

### Katalysator V4 (Vergleichsbeispiel)

Katalysator V4 war ein säureaktivierter Natrium-Montmorillonit (KO® von Südchemie) mit einer BET-Oberfläche von 264 m²g⁻¹.

### Katalysator B

Der Katalysator B bestand aus Strängen des Katalysators A. Hierzu wurde das XMP-4 Pulver mit Wasser in einem Kneter vermengt und in einer Strangpresse zu Strängen verformt. Diese wurden anschließend bei 350°C kalziniert.

### Polymerisation

### Beispiel 1

In einem 500 ml fassenden Rührkolben werden 182 g Tetrahydrofuran und 18 g Acetanhydrid vorgelegt und auf 50°C erwärmt. Unter Rühren (180 U/min) werden 10 g Katalysator hinzugefügt, und es wird 45 min bei 50°C gerührt. Anschließend wird der Katalysator über ein Druckfilter abfiltriert. Vom Filtrat wird die Farbzahl bestimmt und dieses dann am Rotationsverdampfer eingedampft (30 min bei 150°C/1013 mbar und 30 min bei 150°C/0.2-0.3 mbar). Das so erhaltene pTHF-Diacetat wird zur Umsatzbestimmung ausgewogen.

Die erhaltenen Ergebnisse sind in der Tabelle 1 zusammengestellt.

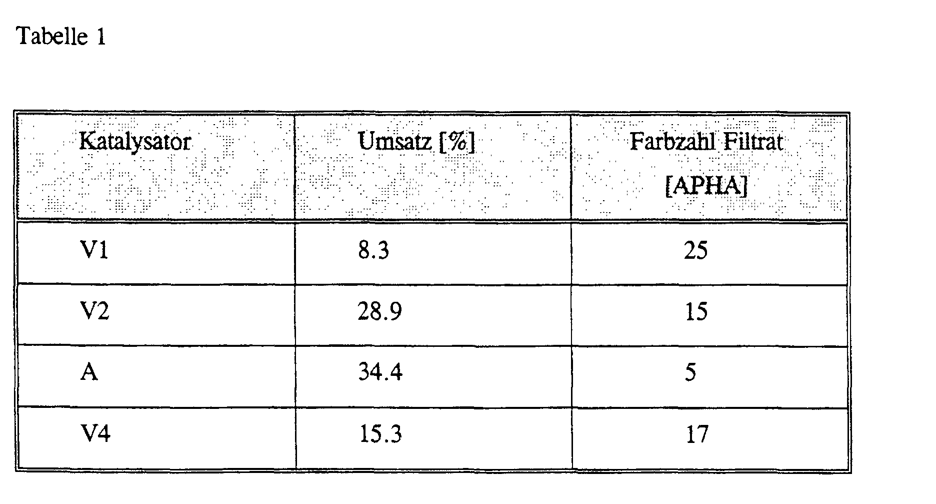

Die Beispiele zeigen deutlich die Vorteile des erfindungsgemäßen Katalysators gegenüber den nach dem Stand der Technik bekannten Vergleichskatalysatoren V1, V2 und V4: bei höherem Umsatz wird sogar eine niedrigere Farbzahl erreicht.

### Beispiel 2

In eine Umlaufapparatur wurden jeweils 1.2 Liter Katalysatorstränge eingebaut. Der Reaktor wurde mit 60 ml/h einer THF/Essigsäureanhydrid-Mischung (6.9 Gew.-% Essigsäureanhydrid) als Zulauf beschickt (Rieselfahrweise geflutet); die Rückführung betrug 8 l/h. Bei gleicher Umlaufmenge wurde nach 13 Tagen der Zulauf auf 90 ml/h erhöht und nach 33 Tagen auf 120 ml/h. Von den Austrägen wurde täglich die Farbzahl bestimmt und diese dann am Rotationsverdampfer eingedampft (30 min bei 150°C/1013 mbar und 30 min bei 150°C/0.2-0.3 mbar). Das so erhaltene pTHF-Diacetat wird zur Umsatzbestimmung ausgewogen. Tabelle 2 zeigt die Ergebnisse bei den jeweiligen Einstellungen für die Katalysatoren V3 und B. Innerhalb der Versuchszeit von jeweils 40 Tagen konnte keine Desaktivierung festgestellt werden; die Austräge zeigten jeweils konstante Umsätze und Farbzahlen. Das Molgewicht lag jeweils bei ca. 900 Dalton.

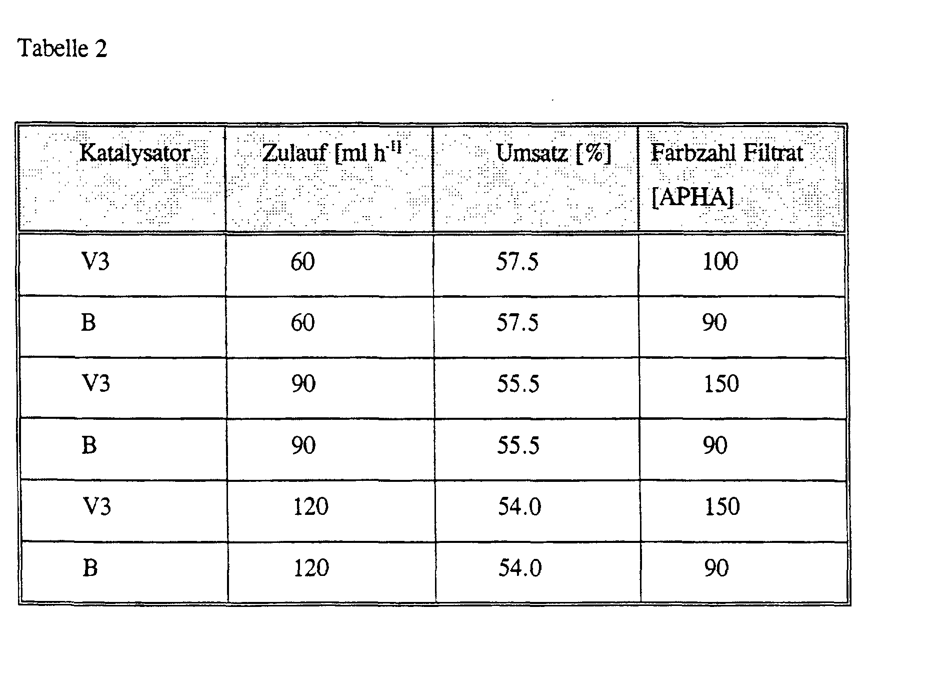

Der Vergleich zeigt, daß der erfindungsgemäße Katalysator B bei gleichem (Gleichgewichts-)Umsatz wie der Vergleichskatalysator V3 eine deutlich niedrigere Farbzahl liefert. In der Anfangsphase erreichte der Katalysator B auch deutlich schneller das Gleichgewicht, was seine höhere Aktivität widerspiegelt.

## Patentansprüche

1. Verfahren zur Herstellung von Polytetrahydrofuran, Polytetrahydrofuran-Copolymeren oder Diestern oder Monoestern davon durch Polymerisation von Tetrahydrofuran in Gegenwart mindestens eines Telogens und/oder Comonomers an säureaktivierten Calcium-Montmorilloniten als Katalysator, **dadurch gekennzeichnet, daß** der Calcium-Montmorillonit eine BET-Oberfläche von mindestens 300 m²/g, eine Acidität von mindestens 0.02 mmol/g bei pKₛ < -3 und ein Porenvolumen von mindestens 0.40 cm³/g für Porengrößen im Bereich von 30 bis 200 Å besitzt.

2. Verfahren nach Anspruch 1, **dadurch gekennzeichnet, daß** die BET-Oberfläche des Ca-Montmorillonite zwischen 300 und 400 m²/g beträgt.

3. Verfahren nach Anspruch 1 oder 2, **dadurch gekennzeichnet, daß** die Acidität des Ca-Montmorilloniten zwischen 0,02 und 0,1 mmol/g bei pKₛ < -3 beträgt.

4. Verfahren nach einem der Ansprüche 1 bis 3, **dadurch gekennzeichnet, daß** das Porenvolumen des Ca-Montmorilloniten zwischen 0,40 und 1,0 cm³/g für Porengrößen im Bereich von 30 bis 200 Å beträgt.

5. Verfahren nach einem der Ansprüche 1 bis 4, **dadurch gekennzeichnet, daß** der Montmorillonit vor dem Einsatz in der Polymerisation bei 150 bis 600°C kalziniert wird.

6. Verfahren nach einem der Ansprüche 1 bis 5, **dadurch gekennzeichnet, daß** der Katalysator mit mindestens einem Übergangsmetall der Gruppen 7 bis 10 des Periodensystems der Elemente dotiert ist.

7. Verfahren nach einem der Ansprüche 1 bis 6, **dadurch gekennzeichnet, daß** der Katalysator weniger als 3 Gew.-%, bezogen auf das Gesamtgewicht des Katalysators, an Alkalimetallionen enthält.

8. Verfahren nach einem der Ansprüche 1 bis 7, **dadurch gekennzeichnet, daß** man als Telogen und/oder Comonomer Wasser, 1,4-Butandiol, 2-Butin-1,4-diol, Polytetrahydrofuran eines Molekulargewichts von 200 bis 700 Dalton, eine C₁- bis C₂₀-Monocarbonsäure, ein Carbonsäureanhydrid aus C₂- bis C₂₀-Monocarbonsäuren, 1,2-Alkylenoxide, 2- oder 3-Methyltetrahydrofuran, Diole oder Gemische dieser Telogene und/oder Comonomere verwendet.

9. Verfahren nach Anspruch 8, **dadurch gekennzeichnet, daß** man Acetanhydrid als Telogen verwendet.

10. Verfahren nach einem der Ansprüche 1 bis 9, **dadurch gekennzeichnet, daß** die Polymerisation in Gegenwart von Wasserstoff durchgeführt wird.

## Claims

1. A process for preparing polytetrahydrofuran, polytetrahydrofuran copolymers or diesters or monoesters thereof, which comprises polymerizing tetrahydrofuran in the presence of at least one telogen and/or comonomer over an acid-activated calcium montmorillonite as catalyst having a BET surface area of at least 300 m²/g, an acidity of at least 0.02 mmol/g at pKₐ < -3 and a pore volume of at least 0.40 cm³/g for pore sizes in the range from 30 to 200 Å.

2. A process as claimed in claim 1, wherein the calcium montmorillonite has a BET surface area of from 300 to 400 m²/g.

3. A process as claimed in claim 1 or 2, wherein the calcium montmorillonite has an acidity of from 0.02 to 0.1 mmol/g at pKₐ < -3.

4. A process as claimed in any of claims 1 to 3, wherein the calcium montmorillonite has a pore volume of from 0.40 to 1.0 cm³/g for pore sizes in the range from 30 to 200 Å.

5. A process as claimed in any of claims 1 to 4, wherein the montmorillonite is calcined at from 150 to 600°C prior to use in the polymerization.

6. A process as claimed in any of claims 1 to 5, wherein the catalyst is doped with at least one transition metal of groups 7 to 10 of the periodic table of the elements.

7. A process as claimed in any of claims 1 to 6, wherein the catalyst comprises less than 3% by weight of alkali metal ions, based on the total catalyst weight.

8. A process as claimed in any of claims 1 to 7, wherein the telogen and/or comonomer used is water, 1,4-butanediol, 2-butyne-1,4-diol, polytetrahydrofuran having a molecular weight of from 200 to 700 dalton, a C₁-C₂₀-monocarboxylic acid, a C₂-C₂₀-monocarboxylic anhydride, a 1,2-alkylene oxide, 2-methyltetrahydrofuran, 3-methyltetrahydrofuran, a diol or a mixture thereof.

9. A process as claimed in claim 8, wherein the telogen used is acetic anhydride.

10. A process as claimed in any of claims 1 to 9, wherein the polymerization is carried out in the presence of hydrogen.

## Revendications

1. Procédé pour la préparation de polytétrahydrofuranne, de copolymères de polytétrahydrofuranne ou de diesters ou monoesters de ceux-ci par polymérisation de tétrahydrofuranne en présence d'au moins un télogène et/ou comonomère sur de la montmorillonite de calcium activée par un acide comme catalyseur, **caractérisé par le fait que** la montmorillonite de calcium possède une surface BET d'au moins 300 m²/g, une acidité d'au moins 0,02 mmol/g à un pKₛ < -3 et un volume de pores d'au moins 0,40 cm³/g, pour des tailles de pores dans l'intervalle de 30 à 200 Å.

2. Procédé selon la revendication 1, **caractérisé par le fait que** la surface BET de la montmorillonite de Ca vaut entre 300 et 400 m²/g.

3. Procédé selon la revendication 1 ou 2, **caractérisé par le fait que** l'acidité de la montmorillonite de Ca vaut entre 0,02 et 0,1 mmol/g à pKₛ < -3.

4. Procédé selon l'une des revendications 1 à 3, **caractérisé par le fait que** le volume des pores de la montmorillonite de Ca se situe entre 0,40 et 1,0 cm³/g pour des tailles de pores dans l'intervalle de 30 à 200 Å.

5. Procédé selon l'une des revendications 1 à 4, **caractérisé par le fait que** la montmorillonite est calcinée entre 150 et 600°C avant d'être introduite dans la polymérisation.

6. Procédé selon l'une des revendications 1 à 5, **caractérisé par le fait que** le catalyseur est dopé avec au moins un métal de transition des groupes 7 à 10 de la classification périodique des éléments.

7. Procédé selon l'une des revendications 1 à 6, **caractérisé par le fait que** le catalyseur contient moins de 3 % en poids, par rapport au poids total du catalyseur, d'ions de métal alcalin.

8. Procédé selon l'une des revendications 1 à 7, **caractérisé par le fait qu'**on utilise comme télogène et/ou comonomère l'eau, le 1,4-butanediol, le 2-butyne-1,4-diol, du polytétrahydrofuranne ayant une masse moléculaire de 200 à 700 daltons, un acide monocarboxylique en C₁ à C₂₀, un anhydride d'acide carboxylique dérivé d'acides monocarboxyliques en C₂ à C₂₀, des oxydes de 1,2-alkylène, du 2- ou 3-méthyltétrahydrofuranne, des diols ou des mélanges de ces télogènes et/ou comonomères.

9. Procédé selon la revendication 8, **caractérisé par le fait qu'**on utilise de l'anhydride acétique comme télogène.

10. Procédé selon l'une des revendications 1 à 9, **caractérisé par le fait que** la polymérisation est conduite en présence d'hydrogène.
